# EUROPÄISCHE PATENTSCHRIFT

(11) **EP 2 986 415 B1**
(45) Veröffentlichungstag und Bekanntmachung des Hinweises auf die Patenterteilung: **01.03.2017**
(21) Anmeldenummer: 14723700.2
(22) Anmeldetag: 08.04.2014
(51) Int. Cl.: B24B 13/00, B24B 41/02, B24B 41/06, B23Q 1/01, B23Q 1/48, B23Q 1/54, B23Q 1/62

(54) **VORRICHTUNG UND VERFAHREN ZUM BEARBEITEN, INSBESONDERE SCHLEIFEN, EINES OPTISCHEN WERKSTÜCKS**
DEVICE AND METHOD FOR PROCESSING, IN PARTICULAR GRINDING, AN OPTICAL WORKPIECE
DISPOSITIF ET PROCÉDÉ D'USINAGE, NOTAMMENT DE RECTIFICATION, D'UNE PIÈCE OPTIQUE

(30) Priorität: 15.04.2013 DE 102013006431; 19.04.2013 DE 102013006710
(43) Veröffentlichungstag der Anmeldung: 24.02.2016
(73) Patentinhaber: Schneider GmbH & Co. KG, 35112 Fronhausen (DE)
(72) Erfinder: SCHNEIDER, Gunter, 35037 Marburg (DE)
(74) Vertreter: Von Rohr Patentanwälte Partnerschaft mbB
(86) Internationale Anmeldenummer: PCT/EP2014/000933
(87) Internationale Veröffentlichungsnummer: WO 2014/169994

(56) Entgegenhaltungen:
- DE-A1- 2 659 489
- DE-A1- 4 307 482
- DE-A1- 19 751 750

## Beschreibung

Die vorliegende Erfindung betrifft eine Vorrichtung und ein Verfahren zum Bearbeiten, insbesondere Schleifen, eines optischen Werkstücks mittels mehrere Werkzeuge.

Insbesondere betrifft die vorliegende Erfindung die Bearbeitung von optischen Werkstücken, insbesondere Linsen, vorzugsweise aus Glas oder sonstigen Materialien. Hierbei kommt es insbesondere auf eine sehr hohe Bearbeitungsgenauigkeit an.

Die Bearbeitung bzw. das Schleifen von optischen Werkstücken erfolgt üblicherweise in mehreren Schritten, insbesondere erfolgt zunächst ein Grobschleifen und dann ein Feinschleifen. Dementsprechend müssen für die verschiedenen Schritte verschiedene Werkzeuge, insbesondere mit groberer Körnung und feinerer Körnung, eingesetzt werden.

Die optischen Werkstücke bzw. Linsen werden üblicherweise sphärisch oder asphärisch bearbeitet, wenn keine sogenannte Freiformfläche bzw. frei definierte Oberfläche erzeugt wird. Die sphärische Bearbeitung einerseits und die asphärische Bearbeitung andererseits erfordern unterschiedliche Werkzeuge.

Insbesondere werden für die sphärische Bearbeitung sogenannte Topfschleifwerkzeuge eingesetzt, die becherartig ausgebildet sind und an ihrer offenen Seite mit ihrer Umfangskante am zugeordneten Werkstück im Wesentlichen axial und linienartig angreifen. Bei der asphärischen Bearbeitung werden insbesondere sogenannte Umfangsschleifwerkzeuge eingesetzt, die insbesondere mit der radialen Außenseite ihres Umfangs am zugeordneten Werkstück radial und punktförmig angreifen.

Bisher werden Vorrichtungen entweder für die sphärische Bearbeitung oder für die asphärische Bearbeitung eingesetzt oder erfordern einen Werkzeugwechsel oder ein Umspannen des Werkstücks.

Die DE 197 51 750 A1 offenbart eine Vorrichtung und ein Verfahren zum Herstellen optischer Linsen mit mindestens drei Schleifwerkzeugen und einem unten liegenden Schwenkkopf. Der Schwenkkopf trägt die zu bearbeitende Linse. Die Werkzeuge sind von Werkzeugantrieben gehalten. Die Werkzeugantriebe sind alle nebeneinander angeordnet und zusammen in vertikaler und horizontaler Richtung verfahrbar, um die verschiedenen Werkzeuge nacheinander am zu bearbeitenden Werkstück angreifen zu lassen. Die DE 197 51 750 A1 sieht insbesondere die Bearbeitung mittels Topfwerkzeugen vor. Es sollen nacheinander mindestens drei Schleifvorgänge durchgeführt werden, insbesondere ein Grobschleifen, Feinschleifen und Feinstschleifen. Dementsprechend sind hierfür gleichartige Werkzeuge mit unterschiedlichen Körnungen erforderlich und vorgesehen.

Die DE 26 59 489 A1 offenbart eine Vorrichtung zum Bearbeiten optischer Werkstücke, wobei eine motorisch antreibbare Topfscheibe und ein auf einer Bewegungsbahn bewegbarer Werkstückträger vorgesehen sind. Der Werkstückträger ist mittels eines Kreuztisches mit zwei linear beweglich geführten Schlitten in einem X-und Y-Koordinatensystem bewegbar und um eine zum X- und Y-Koordinatensystem normal gerichtete Achse drehbar gelagert.

Der vorliegenden Erfindung liegt die Aufgabe zugrunde, eine Vorrichtung und ein Verfahren anzugeben, wobei eine Bearbeitung eines Werkstücks mit verschiedenen Werkzeugen und insbesondere unterschiedliche Bearbeitungen bei einem einfachen und kompakten Aufbau und/oder hoher Bearbeitungsgenauigkeit ermöglicht werden.

Die obige Aufgabe wird durch eine Vorrichtung gemäß Anspruch 1 oder durch ein Verfahren gemäß Anspruch 13 gelöst. Vorteilhafte Weiterbildungen sind Gegenstand der Unteransprüche.

Ein Aspekt der vorliegenden Erfindung liegt darin, dass die Vorrichtung einen Rahmen, eine daran geführte Traverse und einen an der Traverse verfahrbar gehaltenen Schlitten aufweist, wobei der Schlitten einen Werkstückantrieb zum Rotieren eines zu bearbeitenden Werkstücks trägt. Weiter sind mehrere Werkzeugantriebe bzw. -spindeln für unterschiedliche Werkzeuge stationär am Rahmen angeordnet. Dies gestattet einen sehr einfachen, robusten, kompakten und/oder stabilen Aufbau.

Die Rahmenebene bzw. die Längserstreckung der Traverse verläuft vorzugsweise zumindest im Wesentlichen vertikal.

Die Verfahr- bzw. Bewegungsrichtung des Schlittens verläuft vorzugsweise quer oder senkrecht zur Verfahr- bzw. Bewegungsrichtung der Traverse.

Die Rotationsachse des Werkstücks verläuft vorzugsweise in der von den beiden Bewegungsrichtungen aufgespannten Ebene oder parallel dazu.

Die Rotationsachse und der Werkstückantrieb sowie dessen Werkstückspindel zum Rotieren des Werkstücks sind um eine Schwenkachse schwenkbar, die quer oder senkrecht zu der Rotationsachse und zu den genannten Bewegungsrichtungen verläuft.

Ein anderer Aspekt der vorliegenden Erfindung liegt darin, dass sowohl eine sphärische als auch eine asphärische Bearbeitung mit unterschiedlichen Werkzeugantrieben bzw. -spindeln und unterschiedlichen Werkzeugen insbesondere ohne Werkzeugwechsel und ohne Umspannen des Werkstücks erfolgen kann bzw. vorgesehen ist bzw. die Vorrichtung hierzu ausgebildet ist. Dies ist einer schnellen und hoch genauen Bearbeitung zuträglich.

Gemäß einem weiteren Aspekt der vorliegenden Erfindung erfolgt vorzugsweise sowohl eine sphärische als auch eine asphärische Bearbeitung in der Vorrichtung ohne Werkzeugwechsel. Insbesondere kann zunächst eine sphärische Bearbeitung oder Vorbearbeitung des jeweiligen Werkstücks und anschließend eine weitere asphärische Bearbeitung oder Feinbearbeitung erfolgen. Dies ist einer schnellen und/oder universellen Bearbeitung zuträglich. Hierbei ist zu berücksichtigen, dass bei der sphärischen Bearbeitung mittels eines Topfschleifwerkzeugs aufgrund des zumindest teilweisen linienartigen Angriffs des Topfschleifwerkzeugs am Werkstück eine schnellere Bearbeitung oder Grobbearbeitung als bei dem zumindest im Wesentlichen nur punktförmigen Angriff durch ein sogenanntes Umfangsschleifwerkzeug für die asphärische Bearbeitung möglich ist. Daher wird die asphärische Bearbeitung bzw. das Umfangschleifwerkzeug vorzugsweise nur zur Nachbearbeitung bzw. Weiterverarbeitung oder Feinbearbeitung nach der Grobbearbeitung durch ein oder mehrere Topfschleifwerkzeuge oder nach einer sonstigen Vorbearbeitung eingesetzt.

Gemäß einem anderen Aspekt der vorliegenden Erfindung sind die Werkzeugantriebe bzw. -spindeln für die asphärische Bearbeitung vorzugsweise an entgegengesetzten Seiten des Rahmens und/oder die Werkzeugantriebe bzw. -spindeln für die sphärische Bearbeitung dazwischen und/oder an einem quer dazu oder horizontal verlaufenden Teil des Rahmens angeordnet. Dies ist wiederum einem kompakten Aufbau zuträglich.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine schematische perspektivische Ansicht einer vorschlagsgemäßen Vorrichtung,
- Fig. 2: eine Vorderansicht der Vorrichtung;
- Fig. 3: eine Rückansicht der Vorrichtung;
- Fig. 4: einen schematischen Horizontalschnitt der Vorrichtung; und
- Fig. 5: einen schematischen Vertikalabschnitt der Vorrichtung.

In den Figuren werden für gleiche Komponenten und Bauteile die gleichen Bezugszeichen verwendet, auch wenn eine wiederholte Beschreibung weggelassen ist.

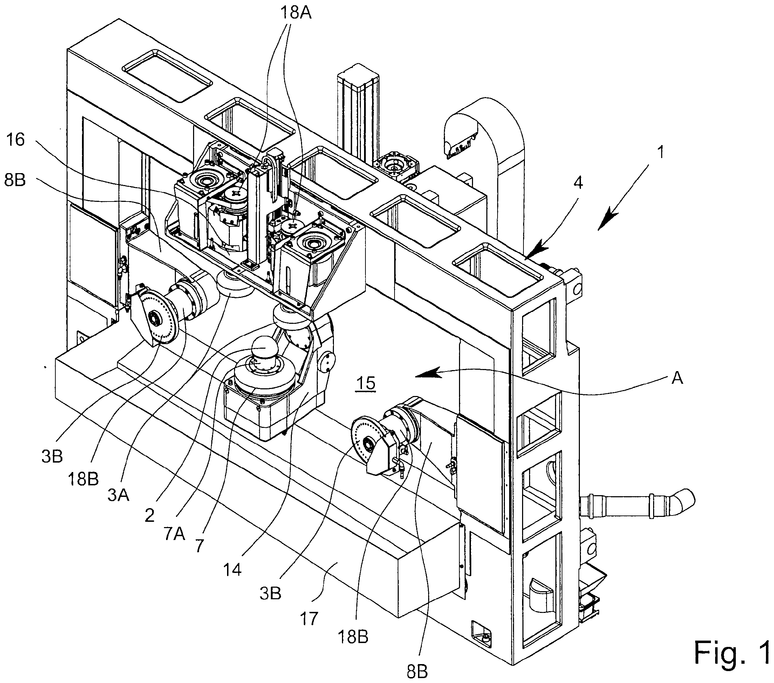

Fig. 1 zeigt schematische eine vorschlagsgemäße Vorrichtung 1 zur Bearbeitung, insbesondere zum Schleifen, eines optischen Werkstücks 2 mittels mehrerer Werkzeuge.

Bei dem optischen Werkstück 2 handelt es sich insbesondere um eine Linse. Es kann sich jedoch grundsätzlich auch um ein sonstiges optisches Bauteil handeln.

Das optische Werkstück 2 besteht vorzugsweise aus Glas, kann aber auch aus einem sonstigen Material bestehen.

Als Werkzeuge zur Bearbeitung des Werkstücks 2 werden insbesondere Topfschleifwerkzeuge 3A und/oder Umfangsschleifwerkzeuge 3B eingesetzt.

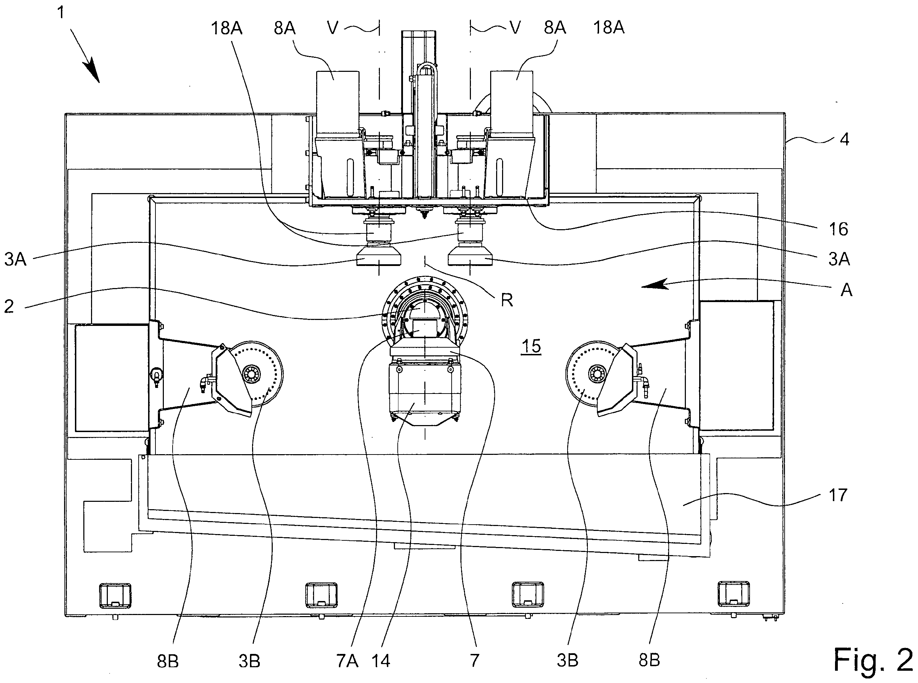

Besonders bevorzugt ist die Vorrichtung 1 zur Aufnahme und zum gleichzeitigen Antrieb von mehreren, unterschiedlichen Werkzeugen, insbesondere mehreren Topfschleifwerkzeugen 3A und/oder mehreren Umfangsschleifwerkzeugen 3B, ausgebildet bzw. einsetzbar oder vorgesehen, wie auch in der Vorderansicht gemäß Fig. 2 angedeutet.

Die Vorrichtung 1 weist einen Rahmen 4 auf. Der Rahmen 4 ist vorzugsweise zumindest im Wesentlichen rechteckig ausgebildet. Die Rahmenebene verläuft vorzugsweise zumindest im Wesentlichen vertikal.

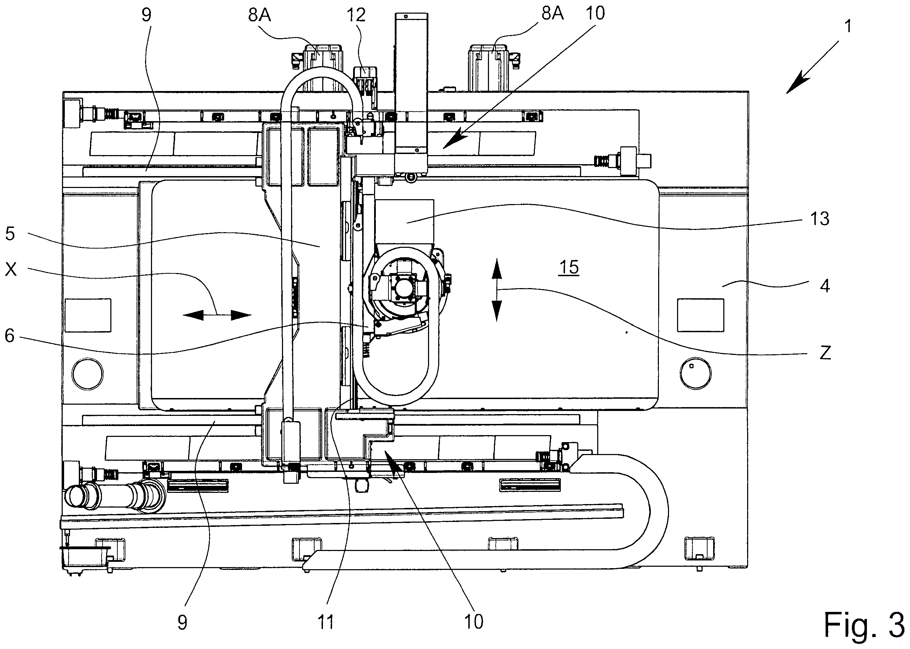

Die Vorrichtung 1 weist eine an dem Rahmen 4 geführte bzw. gehaltene Traverse 5 auf, die in einer ersten bzw. horizontalen Richtung X bewegbar bzw. verfahrbar ist, wie insbesondere aus der Rückansicht gemäß Fig. 3 ersichtlich.

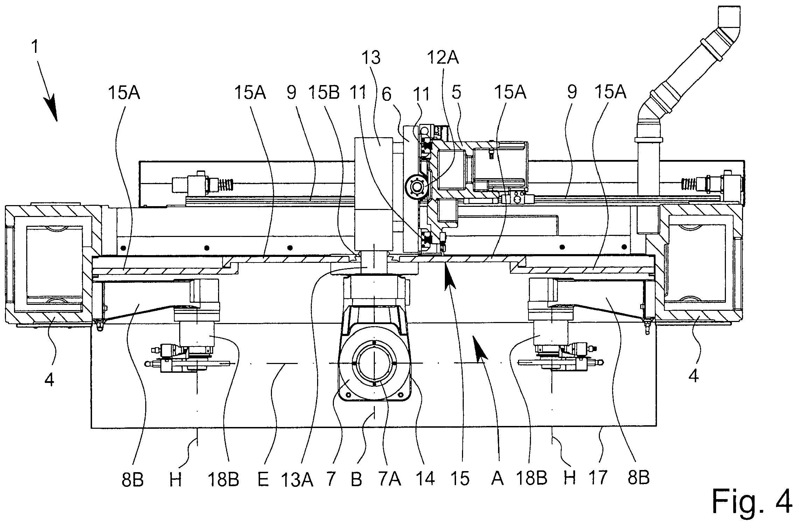

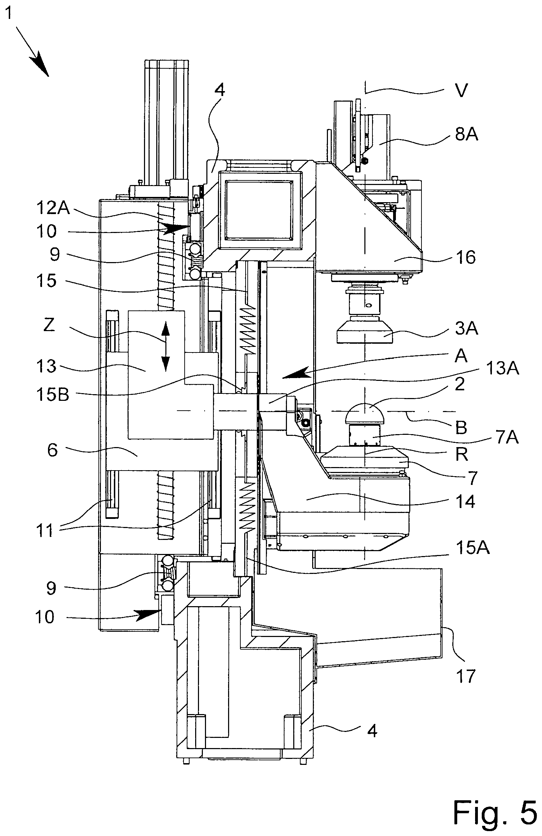

Die Vorrichtung 1 weist einen an der Traverse 5 geführten oder gehaltenen Schlitten 6 auf, wie insbesondere in dem schematischen Horizontalschnitt gemäß Fig. 4 angedeutet. Der Schlitten 6 ist in einer zweiten bzw. vertikalen Richtung Z bewegbar bzw. verfahrbar, wie in dem schematischen Vertikalschnitt gemäß Fig. 5 gezeigt.

Die Vorrichtung 1 weist einen Werkstückantrieb 7 mit einer Werkstückspindel 7A zum Rotieren des Werkstücks 2 um eine Rotationsachse R für die Bearbeitung des Werkstücks 2 auf, der beispielsweise in Fig. 1, 2 und 5 angedeutet, wobei primär nur ein Futter des Werkstückantriebs 7 bzw. der Werkstückspindel 7A für die Halterung des zugeordneten Werkstücks 2 gezeigt wird. Der Werkstückantrieb 7 ist am Schlitten 6 angeordnet bzw. davon gehalten, entweder unmittelbar oder mittelbar, wie später noch näher erläutert.

Die Vorrichtung 1 weist mehrere stationär am Rahmen 4 angeordnete Werkzeugantriebe 8A, 8B und Werkzeugspindeln 18A, 18B zum drehenden Antrieb der Werkzeuge 3A, 3B zur Bearbeitung des Werkstücks 2 auf.

Beim Darstellungsbeispiel ist jedem Werkzeugantrieb 8A, 8B vorzugsweise jeweils eine davon angetriebene Werkzeugspindel 18A, 18B zugeordnet. Es ist jedoch auch möglich, dass ein Werkzeugantrieb mehrere Werkzeugspindeln antreibt, insbesondere wenn diese für die gleiche Bearbeitung vorgesehen sind und/oder nebeneinander bzw. parallel zueinander angeordnet sind.

Besonders bevorzugt sind mehrere Werkzeugantriebe 8A bzw. Werkzeugspindeln 18A zur sphärischen Bearbeitung vorgesehen. Diese sind beim Darstellungsbeispiel besonders bevorzugt oben am Rahmen 4, insbesondere an einer gemeinsamen Halterung 16 wie in Fig. 1, 2 und 5 gezeigt, und/oder alle nebeneinander angeordnet und/oder in der gleichen Richtung bzw. parallel ausgerichtet.

Beim Darstellungsbeispiel verlaufen die Drehachsen V der Werkzeugantriebe 8A für die sphärische Bearbeitung vorzugsweise zumindest im Wesentlichen vertikal.

Die Werkzeugantriebe 8A bzw. Werkzeuge 3A zur sphärischen Bearbeitung weisen vorzugsweise nach unten.

Vorzugsweise sind mehrere Werkzeugantriebe 8B bzw. Werkzeugspindeln 18B zur asphärischen Bearbeitung vorgesehen. Diese sind insbesondere seitlich am Rahmen 4 und/oder auf entgegengesetzten Seiten bzw. Vertikalseiten bzw. zueinander gegenüberliegend angeordnet. In Fig. 1, 2, und 4 sind primär nur Halter mit den Werkzeugspindeln 18B gezeigt.

Die Drehachsen H der Werkzeugantriebe 8B bzw. Werkzeugspindeln 18B zur asphärischen Bearbeitung bzw. der Werkzeuge 3B zur asphärischen Bearbeitung verlaufen vorzugsweise zumindest im Wesentlichen horizontal und/oder quer bzw. senkrecht zu den Drehachsen V der Werkzeugantriebe 8A, Werkzeugspindeln 18A und/oder Werkzeuge 3A für die sphärische Bearbeitung.

Die Traverse 5 ist vorzugsweise an beiden Enden bzw. oben und unten am Rahmen 4 verschieblich geführt. Die Vorrichtung 1 bzw. der Rahmen 4 weist hierzu vorzugsweise zwei insbesondere horizontal verlaufende Führungen 9, beispielsweise Schienen, auf, die vorzugsweise oben und unten am Rahmen 4 bzw. an horizontal verlaufenden Rahmenschenkeln des Rahmens 4 und/oder auf der Rückseite des Rahmens 4 angeordnet sind. Die Traverse 5 ist vorzugsweise über Rollen an den Führungen 9 in X-Richtung bzw. entlang der Führungen 9 bewegbar geführt.

Für die Traverse 5 ist vorzugsweise an jedem Ende - insbesondere also oben und unten - ein Antrieb 10 oder Antriebseingriff zum Verfahren in der ersten Richtung X bzw. entlang der jeweiligen Führung 9 vorgesehen. Bei den Antrieben 10 kann es sich beispielsweise um Spindelantriebe, insbesondere Kugelumlaufspindelantriebe, Linearantriebe o. dgl. handeln. Beim Darstellungsbeispiel sind, wie in Fig. 3 und 5 angedeutet, vorzugsweise Linearmotoren als Antriebe 10 zum Bewegen der Traverse 5 in der ersten Richtung bzw. in X-Richtung, also entlang der Führungen 9, vorgesehen. Besonders bevorzugt sind Spulen der elektrischen Linearmotoren an der Traverse 5 und die zugeordneten Magneten am Rahmen 4 angeordnet..

Die Traverse 5 weist vorzugsweise mindestens zwei Führungsflächen bzw. -schienen 11 zum verschieblichen Führen des Schlittens 6 auf. Die Führungsflächen bzw. -schienen 11 verlaufen vorzugsweise zumindest im Wesentlichen vertikal und/oder entlang der Traverse 5.

Die Führungsflächen bzw. -schienen 11 sind vorzugsweise in horizontaler Richtung bzw. quer oder senkrecht zur Rahmenebene 4 und/oder zu einer von der ersten und zweiten Richtung X, Z aufgespannten Ebene beabstandet. Besonders bevorzugt ist dieser Abstand zumindest im Wesentlichen so groß wie oder größer als die Dicke des Rahmens 4 und/oder des Abstands der Rotationsachse R des Werkstücks 2 von der Traverse 5 bzw. dem Schlitten 6.

Die Vorrichtung 1 bzw. Traverse 5 weist vorzugsweise einen Antrieb 12 zum Verfahren bzw. Bewegen des Schlittens 6 in der zweiten Richtung Z auf. Bei dem Antrieb 12 handelt es sich insbesondere um einen Spindelantrieb o. dgl. Eine Gewindespindel 12A des Antriebs 12 ist in Fig. 4 und 5 angedeutet.

Die Vorrichtung 1 bzw. der Schlitten 6 weist vorzugsweise einen Schwenkantrieb 13 zum Schwenken der Rotationsachse R bzw. des Werkstückantriebs 7 oder zumindest der davon angetriebenen Werkstückspindel 7A um eine Schwenkachse B auf.

Vorzugsweise handelt es sich bei dem Werkstückantrieb 7 um einen Direktantrieb. Beim Darstellungsbeispiel hält der Schwenkantrieb 13 den Werkstückantrieb 7 vorzugsweise über einen Kragarm 14, der vom Schlitten 6 bzw. Schwenkantrieb 13 vorzugsweise nach vorne vorragt, insbesondere über den Rahmen 4 hinaus, und insbesondere im Bereich eines freien Endes den Werkstückantrieb 7 hält.

Die Schwenkachse B verläuft quer oder senkrecht zu der Rotationsachse R.

Insbesondere ist eine Aufnahme bzw. ein Futter für das zu bearbeitende Werkstück 2 an der Werkstückspindel 7A und/oder das Werkstück 2 mit seinem Mittelpunkt zumindest im Wesentlichen in Verlängerung des Schwenkantriebs 13 bzw. der Schwenkachse B angeordnet, wie in Fig. 5 angedeutet.

Die Vorrichtung 1 weist vorzugsweise eine Trennwand 15 auf, die insbesondere zwischen dem Werkstück 2 bzw. den Werkzeugen 3A, 3B und/oder dem Werkstückantrieb 7 einerseits und den Werkzeugantrieben 3B, dem Schwenkantrieb 13, der Traverse 5 und/oder dem Schlitten 6 andererseits angeordnet ist bzw. diese voneinander trennt.

Die Trennwand 15 trennt insbesondere einen Arbeitsraum A (in diesem erfolgt die Bearbeitung des Werkstücks 2) von den Antrieben 3B, 13 und/oder von der Traverse 5 und dem Schlitten 6.

Die Trennwand 15 ist vorzugsweise innerhalb des Rahmens 4 oder auf dessen Vorderseite (Bedienerseite) angeordnet.

Die Trennwand 15 verläuft vorzugsweise zumindest im Wesentlichen vertikal.

Die Trennwand 15 ist vorzugsweise derart ausgebildet, dass sie der Bewegung in X-Richtung und Z-Richtung des Schlittens 6 bzw. Schwenkantriebs 13 bzw. Kragarms 14 folgen kann.

Die Trennwand 15 ist vorzugsweise aus mehreren Teilen oder Segmenten 15A aufgebaut, wobei die Trennwand 15 oder deren Teile bzw. Segmente 15A insbesondere zueinander verschiebbar und/oder vorzugsweise flexibel bzw. balgartig verformbar sind, wie in Fig. 4 und 5 angedeutet.

Die Trennwand 15 weist vorzugsweise eine Durchbrechung auf, die von dem Schwenkantrieb 13 bzw. einer davon abragenden Welle 13A bzw. einem Abschnitt des Kragarms 14 durchgriffen wird. Vorzugsweise ist die Welle 13A bzw. der Abschnitt im Bereich der Durchbrechung durch einen Balg 15B der Trennwand 15 umgeben bzw. abgedichtet.

Der Arbeitsraum A ist vorzugsweise im Rahmen 4 und/oder vor dem Rahmen 4 angeordnet oder gebildet.

Der Arbeitsraum A wird weiter vorzugsweise durch die Innenseiten des Rahmens 4 und/oder einer Halterung 16 für die vorzugsweise oben angeordneten Werkzeugantriebe 8A und/oder Werkzeugspindel 18A für die Topfschleifwerkzeuge 3A und/oder durch sonstige insbesondere seitlich und/oder unten und/oder oben und/oder vorne angeordnete Abdeckungen (nicht dargestellt) begrenzt oder gebildet.

Grundsätzlich kann die Vorrichtung 1 auch derart ausgebildet sein, dass das Werkstück 2 zusätzlich in einer nicht dargestellten Y-Richtung senkrecht zur ersten und zweiten Richtung X und Z bewegbar ist. In diesem Fall ist dann die Trennwand 15 bzw. der Balg 15 B entsprechend flexibel ausgebildet, insbesondere im Bereich des Kragarms 14 bzw. der Welle 13A.

Insbesondere dann, wenn die vorgenannte Y-Verstellung nicht möglich ist, liegt die Rotationsachse R zumindest im Wesentlichen in einer Ebene E mit den Drehachsen V der Topfwerkzeuge 3A und/oder mit den Umformungswerkzeugen 3B, wie in Fig. 4 angedeutet.

Die Vorrichtung 1 weist vorzugsweise ein oder mehrere stationär angeordnete Werkzeugantriebe 8A und/oder Werkzeugspindeln 18A für Topfschleifwerkzeuge 3A zur sphärischen Bearbeitung und ein oder mehrere stationär angeordnete Werkzeugantriebe 8B und/oder Werkzeugspindeln 18B für Umfangsschleifwerkzeuge 3B zur asphärischen Bearbeitung auf. Dies gestattet eine universelle Bearbeitung von Werkstücken 2. Besonders bevorzugt kann bei asphärischer Bearbeitung zunächst eine sphärische Vorbearbeitung mittels mindestens eines Topfschleifwerkzeugs 3A in einem oder mehreren Schritten und dann in einem oder mehreren weiteren Schritten die eigentliche asphärische Bearbeitung, insbesondere Feinbearbeitung, durch Umfangsschleifwerkzeuge 3B erfolgen.

Besonders bevorzugt wird sowohl ein Grobschleifen als auch ein Feinschleifen bei der sphärischen Bearbeitung mit unterschiedlichen Werkzeugantrieben 8A bzw. Werkzeugspindeln 18A und Werkzeugen 3A, insbesondere ohne Werkzeugwechsel, ermöglicht.

Bei der sphärischen Bearbeitung weist das Werkstück 2 vorzugsweise zumindest im Wesentlichen nach oben, wobei die Rotationsachse R des Werkstücks 2 üblicherweise etwas zur Vertikalen bzw. Drehachse V der Werkzeugspindeln 18A bzw. Werkzeuge 3A geneigt ist (durch Schwenken um die Schwenkachse B) und das zugeordnete Werkzeug 3A für die sphärische Bearbeitung - insbesondere ein Topschleifwerkzeug - das zu bearbeitende Werkstück 2 vorzugsweise teilweise überdeckt, insbesondere wobei das Werkstück 2 zumindest etwas in das Werkzeug 3A eingreift.

Bei der asphärischen Bearbeitung verläuft die Rotationsachse R des Werkstücks 2 zumindest im Wesentlichen in die gleiche Richtung wie die Drehachse V des zugeordneten Werkzeugs 3A, wobei die Rotationsachse R und die Drehachse V üblicherweise leicht zueinander geneigt sind.

Weiter wird vorzugsweise sowohl ein Grobschleifen als auch ein Feinschleifen bei der asphärischen Bearbeitung mit unterschiedlichen Werkzeugantrieben 8B bzw. Werkzeugspindeln 18A und Werkzeugen 3B, insbesondere ohne Werkzeugwechsel, ermöglicht.

Bei der asphärischen Bearbeitung des Werkstücks 2 weist dieses vorzugsweise zur Seite und/oder verläuft die Rotationsachse R des Werkstücks 2 zumindest im Wesentlichen horizontal und/oder quer bzw. senkrecht zur Drehachse H des zugeordneten Werkzeugs 3B.

Die vorschlagsgemäße Vorrichtung 1 und das vorschlagsgemäße Verfahren gestatten einen sehr kompakten und robusten Aufbau und/oder eine schnelle und universelle Bearbeitung von Werkstücken 2, besonders bevorzugt ohne Werkzeugwechsel und/oder mit hoher Bearbeitungsgenauigkeit.

Erfindungsgemäß ist nur das Werkstück 2 verfahrbar bzw. beweglich gelagert, wohingegen die Werkzeugantriebe 8A, 8B bzw. die Werkzeugspindeln 18A, 18B und damit die Werkzeuge 3A, 3B stationär angeordnet bzw. am Rahmen 4 unbeweglich gehalten sind, so dass die Werkzeuge lediglich rotieren können.

Es ist anzumerken, dass bei der Bearbeitung sowohl das Werkstück 2 als auch das jeweils zugeordnete bzw. angreifende Werkzeug 3A, 3B vorzugsweise mit insbesondere unterschiedlichen Drehgeschwindigkeiten rotieren.

Vorzugsweise weist die Vorrichtung 1 eine Auffangwanne 17 für Schleifmittel, Kühlmittel, Reinigungsmittel o. dgl. auf. Besonders bevorzugt ist die Auffangwanne 17 am oder im Rahmen 4 angeordnet.

### Bezugszeichenliste:

- 1: Vorrichtung
- 2: Werkstück
- 3A: Werkzeug für sphärische Bearbeitung
- 3B: Werkzeug für asphärische Bearbeitung
- 4: Rahmen
- 5: Traverse
- 6: Schlitten
- 7: Werkstückantrieb
- 7A: Werkstückspindeln
- 8A: Werkzeugantrieb für sphärische Bearbeitung
- 8B: Werkzeugantrieb für asphärische Bearbeitung
- 9: Führung
- 10: Antrieb für Traverse
- 11: Führungsschiene
- 12: Antrieb für Schlitten
- 12A: Gewindespindel
- 13: Schwenkantrieb
- 13A: Welle
- 14: Kragarm
- 15: Trennwand
- 15A: Segment
- 15B: Balg
- 16: Halterung
- 17: Auffangwanne
- 18A: Werkzeugspindel für sphärische Bearbeitung
- 18B: Werkzeugspindel für asphärische Bearbeitung

- A: Arbeitsraum
- B: Schwenkachse
- E: Ebene
- H: horizontale Achse
- R: Rotationsachse
- V: vertikale Achse
- X: erste Richtung
- Z: zweite Richtung

## Patentansprüche

1. Vorrichtung (1) zum Bearbeiten, insbesondere Schleifen, eines optischen Werkstücks (2) mittels mehrerer Werkzeuge (3A, 3B), wobei die Vorrichtung (1) aufweist:
einen Rahmen (4);
eine am Rahmen (4) geführte, in einer ersten Richtung (X) verfahrbare Traverse (5);
einen an der Traverse (5) geführten, in einer zweiten Richtung (Z) verfahrbaren Schlitten (6);
einen am Schlitten (6) angeordneten Werkstückantrieb (7) zum Rotieren des Werkstücks (2) bei der Bearbeitung um eine Rotationsachse (R), wobei die Rotationsachse (R) und der Werkstückantrieb (7) sowie eine Werkstückspindel (7A) um eine Schwenkachse (B) schwenkbar sind; und
mehrere stationär am Rahmen (4) angeordnete Werkzeugantriebe (8A, 8B) und Werkzeugspindeln (18A, 18B) für unterschiedliche Werkzeuge (3A, 3B) zur Bearbeitung des Werkstücks (2);
wobei die zweite Richtung (Z) quer oder senkrecht zur ersten Richtung (X), die Rotationsachse (R) in einer von der ersten und zweiten Richtung (X, Z) aufgespannten Ebene und die Schwenkachse (B) quer oder senkrecht zu der Rotationsachse (R) und ersten und zweiten Richtung (X, Z) verläuft.

2. Vorrichtung nach Anspruch 1, **dadurch gekennzeichnet, dass** mehrere Werkzeugantriebe (8A) und/oder Werkzeugspindeln (18A) zur sphärischen Bearbeitung vorgesehen und oben am Rahmen (4) angeordnet sind.

3. Vorrichtung nach Anspruch 1 oder 2, **dadurch gekennzeichnet, dass** mehrere Werkzeugantriebe (8B) und/oder Werkzeugspindeln (18B) zur asphärischen Bearbeitung vorgesehen und seitlich am Rahmen (4) angeordnet sind.

4. Vorrichtung nach einem der voranstehenden Ansprüche, **dadurch gekennzeichnet, dass** die Traverse (5) zumindest im Wesentlichen vertikal verläuft.

5. Vorrichtung nach einem der voranstehenden Ansprüche, **dadurch gekennzeichnet, dass** die Traverse (5) an beiden Enden in der ersten Richtung (X) am Rahmen (4) von Führungen (9) verfahrbar geführt ist, vorzugsweise wobei die Führungen (9) auf der Rückseite des Rahmens (4) angeordnet sind.

6. Vorrichtung nach einem der voranstehenden Ansprüche, **dadurch gekennzeichnet, dass** die Traverse (5) an jedem Ende zum Verfahren in der ersten Richtung (X) antreibbar ist.

7. Vorrichtung nach einem der voranstehenden Ansprüche, **dadurch gekennzeichnet, dass** die Traverse (5) zwei insbesondere in Richtung der Schwenkachse (B) beabstandete Führungsschienen (11) für den Schlitten (6) aufweist, wobei die Führungsschienen (11) längs der Traverse (5) und/oder in der zweiten Richtung (Z) verlaufen.

8. Vorrichtung nach einem der voranstehenden Ansprüche, **dadurch gekennzeichnet, dass** die Traverse (5) einen Antrieb (12) zum Verfahren des Schlittens (6) in der zweiten Richtung (Z) trägt.

9. Vorrichtung nach einem der voranstehenden Ansprüche, **dadurch gekennzeichnet, dass** die Werkzeuge (3A, 3B) und/oder einige oder alle Werkzeugantriebe (8A, 8B) bzw. Werkzeugspindeln (18A, 18B) vor dem Rahmen (4) angeordnet sind.

10. Vorrichtung nach einem der voranstehenden Ansprüche, **dadurch gekennzeichnet, dass** die Vorrichtung (1) einen Schwenkantrieb (13) zum Schwenken der Rotationsachse (R) bzw. des Werkstückantriebs (7) bzw. der Werkstückspindel (7A) aufweist, vorzugsweise wobei der Schwenkantrieb (13) am Schlitten (6) angeordnet ist und/oder den Werkstückantrieb (7) bzw. die Werkstückspindel (7A) über einen Kragarm (14) schwenkbar hält.

11. Vorrichtung nach einem der voranstehenden Ansprüche, **dadurch gekennzeichnet, dass** die Mitte des Werkstücks (2) zumindest im Wesentlichen in der Schwenkachse (B) liegt.

12. Vorrichtung nach einem der voranstehenden Ansprüche, **dadurch gekennzeichnet, dass** die Vorrichtung (1) eine Trennwand (15), insbesondere zum Abtrennen eines Arbeitsraums (A), in dem die Bearbeitung erfolgt, von dem Werkstückantrieb (7), von Antrieben (10, 12) zum Verfahren der Traverse (5) und/oder des Schlittens (6) und/oder von einem Schwenkantrieb (13) zum Schwenken der Rotationsachse (R) bzw. des Werkstückantriebs (7) aufweist, vorzugsweise wobei die Trennwand (15) vom Rahmen (4) gehalten und/oder geführt ist und/oder die Trennwand (15) aus mehreren relativ zueinander verschiebbaren Segmenten (15A) gebildet, verschieblich und/oder flexibel ausgebildet ist.

13. Verfahren zum Schleifen optischer Werkstücke (2) mittels einer Vorrichtung (1) nach einem der voranstehenden Ansprüche, wobei sowohl eine sphärische als auch eine asphärische Bearbeitung in der Vorrichtung (1) erfolgt, wobei nur das zu bearbeitende Werkstück (2), zusammen mit einem zugeordneten Werkstückantrieb (7), verfahren und verschwenkt wird.

14. Verfahren nach Anspruch 13, **dadurch gekennzeichnet, dass** mittels der Vorrichtung (1) sowohl ein Grobschleifen als auch ein Feinschleifen bei der sphärischen und/oder asphärischen Bearbeitung mit unterschiedlichen Werkzeugspindeln (18A, 18B) und Werkzeugen (3A, 3B), insbesondere Topfschleifwerkzeugen bzw. Umfangsschleifwerkzeugen, erfolgt.

## Claims

1. Device (1) for machining, in particular grinding, of an optical workpiece (2) by means of multiple tools (3A, 3B), wherein the device (1) comprises:
a frame (4);
a traverse (5) guided at the frame (4) and movable in a first direction (X);
a carriage (6) guided at the traverse (5) and movable in a second direction (Z);
a workpiece drive (7) arranged at the carriage (6) for rotating the workpiece (2) about a rotation axis (R) during the machining, wherein the rotation axis (R) and the workpiece drive (7) as well as a workpiece spindle (7A) are pivotable about a pivot axis (B); and
multiple tool drives (8A, 8B) and tool spindles (18A, 18B) arranged stationary on the frame (4) for different tools (3A, 3B) for machining the workpiece (2);
wherein the second direction (Z) runs transversal or perpendicular to the first direction (X), the rotation axis (R) runs in a plane which is spanned by the first and second directions (X, Z), and the pivot axis (B) runs transversal or perpendicular to the rotation axis (R) and the first and second directions (X, Z).

2. Device according to claim 1, **characterized in that** multiple tool drives (8A) and/or tool spindles (18A) are provided for spherical machining and are arranged on top of the frame (4).

3. Device according to claim 1 or 2, **characterized in that** multiple tool drives (8B) and/or tool spindles (18B) are provided for aspherical machining and are arranged laterally on the frame (4).

4. Device according to one of the preceding claims, **characterized in that** the traverse (5) runs at least essentially vertically.

5. Device according to one of the preceding claims, **characterized in that** the traverse (5) is movably guided at both ends in the first direction (X) at the frame (4) with guides (9), preferably wherein the guides (9) are arranged on the rear side of the frame (4).

6. Device according to one of the preceding claims, **characterized in that** the traverse (5) may be driven at each end to move in the first direction (X).

7. Device according to one of the preceding claims, **characterized in that** the traverse (5) has two guide rails (11) for the carriage (6) spaced apart in particular in the direction of the pivot axis (B), wherein the guide rails (11) run along the traverse (5) and/or in the second direction (Z).

8. Device according to one of the preceding claims, **characterized in that** the traverse (5) carries a drive (12) for driving the carriage (6) in the second direction (Z).

9. Device according to one of the preceding claims, **characterized in that** the tools (3A, 3B) and/or some or all of the tool drives (8A, 8B) or tool spindles (18A, 18B) are arranged in front of the frame (4).

10. Device according to one of the preceding claims, **characterized in that** the device (1) comprises a pivot drive (13) for pivoting the rotation axis (R) or the workpiece drive (7) or the workpiece spindle (7A) respectively, preferably wherein the pivot drive (13) is arranged at the carriage (6) and/or holds the workpiece drive (7) or the workpiece spindle (7A) respectively, pivotably by means of a cantilever arm (14).

11. Device according to one of the preceding claims, **characterized in that** the center of the workpiece (2) lies at least substantially in the pivot axis (B).

12. Device according to one of the preceding claims, **characterized in that** the device (1) comprises a separating wall (15), in particular for separating a working space (A), in which the machining takes place, from the workpiece drive (7), from drives (10, 12) for the movement of the traverse (5) and/or the carriage (6) and/or from a pivot drive (13) for pivoting the rotation axis (R) or the workpiece drive (7) respectively, preferably wherein the separating wall (15) is held and/or guided by the frame (4) and/or the separating wall (15) is formed movable, flexible and/or from multiple segments (15A) that are movable relative to each other.

13. Method for grinding optical workpieces (2) by means of a device (1) according to one of the preceding claims, wherein both spherical as well as aspherical machining is performed in the device (1), wherein only the workpiece (2) to be machined is moved and pivoted together with an associated workpiece drive (7).

14. Method according to claim 13, **characterized in that** by means of the device (1) both a rough grinding as well as a fine grinding are effected in the spherical and/or aspherical machining with different tool spindles (18A, 18B) and tools (3A, 3B), in particular cup-type grinding tools or peripheral grinding tools.

## Revendications

1. Dispositif (1) pour l'usinage, plus particulièrement le meulage, d'une pièce optique (2) au moyen de plusieurs outils (3A, 3B), le dispositif (1) comprenant :
un cadre (4) ;
une traverse (5) guidée le long du cadre (4), mobile dans une première direction (X) ;
un chariot (6) guidé le long de la traverse (5), mobile dans une deuxième direction (Z) ;
un entraînement de pièce (7), disposé sur le chariot (6), pour la rotation de la pièce (2) lors de l'usinage autour d'un axe de rotation (R), l'axe de rotation (R) et l'entraînement de pièce (7) ainsi qu'une broche de pièce (7A) pouvant pivoter autour d'un axe de pivotement (B) ; et
plusieurs entraînements d'outils (8A, 8B) disposé de manière stationnaire sur le cadre (4) et des broches d'outils (18A, 18B) pour différents outils (3A, 3B) pour l'usinage de la pièce (2) ;
la deuxième direction (Z) étant transversale ou perpendiculaire par rapport à la première direction (X), l'axe de rotation (R) s'étendant dans un plan défini par la première et la deuxième direction (X, Z) et l'axe de pivotement s'étendant transversalement ou perpendiculairement à l'axe de rotation (R) et à la première et la deuxième direction (X, Z).

2. Dispositif selon la revendication 1, **caractérisé en ce que** plusieurs entraînements d'outils (8A) et/ou broches d'outils (18A) sont prévus pour l'usinage sphérique et sont disposés en haut du cadre (4).

3. Dispositif selon la revendication 1 ou 2, **caractérisé en ce que** plusieurs entraînements d'outils (8B) et/ou broches d'outils (18B) sont prévus pour l'usinage asphérique et sont disposés sur le côté du cadre (4).

4. Dispositif selon l'une des revendications précédentes, **caractérisé en ce que** la traverse (5) s'étend au moins globalement verticalement.

5. Dispositif selon l'une des revendications précédentes, **caractérisé en ce que** la traverse (5) est guidée de manière mobile aux deux extrémités dans la première direction (X) le long du cadre (4) par des guidages (9), de préférence les guidages (9) étant disposés à l'arrière du cadre (4).

6. Dispositif selon l'une des revendications précédentes, **caractérisé en ce que** la traverse (5) peut être entraînée à chaque extrémité pour un déplacement dans la première direction (X).

7. Dispositif selon l'une des revendications précédentes, **caractérisé en ce que** la traverse (5) comprend deux rails de guidage (11), plus particulièrement écartés dans la direction de l'axe de pivotement (B), pour le chariot (6), les rails de guidage (11) s'étendant le long de la traverse (5) et/ou dans la deuxième direction (Z).

8. Dispositif selon l'une des revendications précédentes, **caractérisé en ce que** la traverse (5) supporte un entraînement (12) pour le déplacement du chariot (6) dans la deuxième direction (Z).

9. Dispositif selon l'une des revendications précédentes, **caractérisé en ce que** les outils (3A, 3B) et/ou certains ou tous les entraînements d'outils (8A, 8B) ou broches d'outils (18A, 18B) sont disposés devant le cadre (4).

10. Dispositif selon l'une des revendications précédentes, **caractérisé en ce que** le dispositif (1) comprend un entraînement pivotant (13) pour le pivotement de l'axe de rotation (R) ou de l'entraînement de pièce (7) ou de la broche de pièce (7A), de préférence l'entraînement pivotant (13) étant disposé sur le chariot (6) et/ou maintenant l'entraînement de pièce (7) ou la broche de pièce (7A) de manière pivotante par l'intermédiaire d'un bras de grue (14).

11. Dispositif selon l'une des revendications précédentes, **caractérisé en ce que** le centre de la pièce (2) se trouve au moins globalement dans l'axe de pivotement (B).

12. Dispositif selon l'une des revendications précédentes, **caractérisé en ce que** le dispositif (1) comprend une cloison (15), plus particulièrement pour la séparation d'un espace de travail (A), dans lequel l'usinage a lieu, de l'entraînement de pièce (7), des entraînements (10, 12) pour le déplacement de la traverse (5) et/ou du chariot (6) et/ou d'un entraînement de pivotement (13) pour le pivotement de l'axe de rotation (R) ou de l'entraînement de pièce (7), de préférence la cloison (15) étant maintenue et/ou guidée par le cadre (4) et/ou la cloison (15) étant conçue de manière coulissante, flexible et/ou étant constituée de plusieurs segments (15A) pouvant coulisser entre eux.

13. Procédé de meulage de pièces optiques (2) au moyen d'un dispositif (1) selon l'une des revendications précédentes, un usinage sphérique ainsi qu'un usinage asphérique ayant lieu dans le dispositif (1), seule la pièce (2) à usiner étant déplacée et pivotée ensemble avec un entraînement de pièce (7) correspondant.

14. Procédé selon la revendication 13, **caractérisé en ce que** le dispositif (1) permet aussi bien un meulage grossier qu'un meulage fin lors de l'usinage sphérique et/ou asphérique avec différentes broches d'outils (18A, 18B) et différents outils (3A, 3B), plus particulièrement des outils de meulage en forme de cloche ou des outils de meulage périphériques.
